# EUROPEAN PATENT APPLICATION

(11) **EP 2 325 712 A1**
(43) Date of publication of application: **25.05.2011**
(21) Application number: 09176697.2
(22) Date of filing: 20.11.2009
(51) Int. Cl.: G05B 19/409

(54) **Control panel for a control system and a control system**

(71) Applicant: Zerogroup Holding OÜ, 51003 Tartu (EE)
(72) Inventor: Vimberg, Priit, 10915, Tallinn (EE); Raestik, Raivo, 11913, Tallinn (EE)
(74) Representative: Kupiainen, Juhani Kalervo

(57) **Abstract**

The invention relates to a control panel and controlling system for adjusting environmental conditions of at least one location, wherein the location has desired environmental conditions. The system comprises equipments controlled by controlling means for changing and/or maintaining the environmental condition of the locations. The controlling means is adapted to provide controlling parameters to equipments for adjusting the environmental condition of said location. The system includes a control panel including at least one sensor, whereby the environmental condition is controlled on the basis of the signal received from the sensor.

## Description

### TECHNICAL FIELD OF THE INVENTION

The present invention relates to a control panel for a control system and a control system. The invention especially relates to control systems for controlling environmental conditions of different entities, such as rooms. The environmental conditions may relate e.g. temperature, humidity, CO₂ level, electricity, access rules, water supply, and lighting, for example.

### BACKGROUND OF THE INVENTION

An average household annually uses approximately 13 MWh of energy only for heating the premises. In addition, all those households generate approximately 1/5 of global CO₂ emissions. Operating costs (including energy costs) for the building can make up 80% of the total cost of ownership during a building's lifecycle. Thus it is especially important to invest in energy efficiency, with today's rising energy prices, to save on future operating costs.

In order to save energy and to improve living environment in buildings, there are control systems for adjusting heating, air conditioning, and possibly lighting, for example. Simple systems may include a heater, a sensor, and an adjustment panel for adjusting the desired temperature. However, with such systems energy is often used for e.g. heating even at situations when it is not necessary. More facilitated systems may include several sensors and timer equipments. There are also separate security systems available for buildings. However, the more complicated the system is, the more difficult and costly it generally is to install such a system, and also more difficult to use it.

### SUMMARY OF THE INVENTION

An object of the invention is to alleviate the problems and disadvantages relating to the known prior art solution. Especially the object is to allow increasing users' security, comfort and quality of life, and saving energy at the same time with less difficult and costly installation work, and with an easy to use interface.

At least a part of the objects of the invention is achieved by the present inventive control panel for controlling environmental conditions and/or security in a control system, and related control system for controlling environmental conditions and/or security. In the inventive solution, a sensor is integrated into a control panel, whereby the control panel serves as both a user interface and a sensor for providing sensor data for the control system.

The control panel according to the invention for a control system of a building, which control system comprises sensors for sensing conditions in the building, user input means inputting control commands to the system, processing means for controlling actuators of the building on the basis of the user commands and the data received from the sensors, and user output means for providing information on the system for the user, is characterized in that one and same control panel comprises at least one said user input means, at least one said user output means, and at least one said sensor, whereby a value of a magnitude of the building conditions is arranged to be controllable by the system on the basis of user input from said user input means of the control panel and by the sensor data received from the sensor of the control panel.

Control system according to the invention for a building, comprising sensors for sensing conditions in the building, user input means inputting control commands to the system, processing means for controlling equipments of the building on the basis of the user commands and the data received from the sensors, and user output means for providing information on the system for the user, is characterized in that the system comprises a control panel, and one and same control panel comprises user input means, user output means, and a sensor, whereby a value of a magnitude of the building conditions is arranged to be controllable by the system on the basis of user input from said user input means of the control panel and by the sensor data received from the sensor of the control panel.

In one embodiment of the invention the control panel includes a temperature sensor. The control system thus receives information on the temperature of the room, for example, and uses this information for controlling e.g. heater, air conditioning, ventilating etc. equipment in order to adjust the temperature according to the set value. The set value may preferably be set at the user interface of the control system, such as the same panel including the temperature sensor. The control panel may include a touch screen for inputting such data. The touch screen may also be used for setting alternative control modes for the control system. The control panel preferably also includes a display, which may be used, for example, for showing measured values such as temperature value, or for showing the input for providing feedback for the user when using the touch screen for inputting e.g. control settings.

In one embodiment the control panel includes a light sensor. This can be used for providing the control system with illuminance value. The control system may use this information for controlling lamps and curtains in order to achieve a target value. As mentioned above, the control panel of this embodiment may also include input means, such as a touch panel, and display means. These can be used also for setting target values for illuminance, control modes etc.

In one embodiment the control panel includes a humidity sensor. This sensor can be used for providing measured humidity values for the control system. The control system may then use this information for controlling equipment which affect the humidity of the room. This way the control system may keep the humidity value of the room within a target value/range.

In one embodiment the control panel includes a CO₂ sensor. This sensor can be used for providing measured CO₂ concentration values of air for the control system. The control system may then use this information for controlling ventilation of the room. This way the control system may keep the CO₂ value of the room within a target value/range.

In one further embodiment the control panel includes a movement detector. This detector can be used for providing presence information for the control system. For example, the target temperature and the target illuminance may depend on whether there are people present in the room.

In one embodiment the control panel has a serial i/o interface for the data transfer with a controller unit of the control system. When using a serial interface it is possible to connect control panels and controllable modules in chain, and there is no need to use separate cables between the controller and each control panel / module.

It is possible to achieve substantive advantages with the control panel according to the present invention. When control panel includes a sensor it is possible to use the same wiring for transferring both sensor measurement data, user input data and display output data between the controller and the control panel. Therefore, much less wiring and connections are required. It is also not necessary to install sensors separately as they will be automatically installed together with installing the control panel. Further, due to avoiding separately installed sensors, the room will be more aesthetic.

It is also possible to include many types of sensors in a control panel. It is then possible to use the sensors according to the needs. If the control system needs to be reconfigured / programmed, it is then not necessary to install additional sensors if the control panels already include a comprehensive set of different types of sensors.

In one embodiment a control panel is also used for access control, whereby it may include an identity card reader, and/or access codes may be input with the user interface of the control panel. The control panel may also include a camera, fingerprint detector or an eye detector for identity verification.

In one embodiment the control panel has a touch screen which has capacitive input means. This allows easy usage of the touch screen while only light pressing of the screen is required for the input.

According to above mentioned embodiments the environmental condition information may relate for example to indoor temperatures, indoor humidity, indoor CO₂-level, indoor/outdoor lighting and access rules used for access controlling to an entity, for example. The environmental conditions controlling means is adapted to control for example heating means, cooling means, ventilation means, lighting means and/or means for affecting humidity. However, it should be clear to a skilled person, that these are only examples and that the invention is not limited only to those examples, but also other environmental conditions may be adjusted by appropriated equipments known by the skilled person, and the control panel may thus include other types of sensors / detectors than which are mentioned here, the "means for affecting humidity" may be equipment, the primary purpose of which is to increase or reduce humidity. It may also be equipment, the primary purpose of which is something else, such as heating or cooling, but which also have an effect on the air humidity.

According to one embodiment of the invention the control system takes into account following magnitudes:
a) current and desired indoor temperatures (of the entity in question and/or also of the other nearest),
b) current and desired indoor humidity when it is adapted to determine the control parameter signal to said means for affecting humidity and/or ventilation means,
c) current and desired indoor CO₂-level when it is adapted to determine the control parameter signal to said ventilation means, and/or
d) current and desired indoor/outdoor lighting when it is adapted to determine the control parameter signal to said lighting means.

When the control panel has means for identityverification, such as a smart card reader, it is possible to use this information as identity presence information. The system has thus information on a certain person's presence in the room/facility, and may use this information for environmental controls and for predicting the future locations of the person. When identified presence information is used in the system, this makes the system capable to personal/identified control of the environment. The system thus has the information on the person who is actually in a certain room or other premises. This way the settings of the control system can be fitted to suit those people and their preferences which are stated in the system. With the identified presence information the system can predict lighting and other environmentalconditions needed in particular parts of the building and/or buildings.

A control panel may also be used for providing the user with general information concerning the controlled facilities. For example, when the user leaves the entity, such as home, the control panel may inform him if something is wrong in the home. For example, it will inform if a window has been left open, or a lamp is not turned off. The system may e.g. ask if warnings should be ignored or not. If the user leaves home, the system may offer to put the home into an economy mode.

The entities where the invention can be used may be e.g. private houses, office buildings, factories, warehouses, schools, hospitals, museums etc.

The exemplary embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

### BRIEF DESCRIPTION OF THE DRAWINGS

Next the invention will be described in greater detail with reference to exemplary embodiments in accordance with the accompanying drawings, in which
- Figure 1: illustrates an exemplary hierarchy of a system according to an embodiment of the invention,
- Figure 2: illustrates an exemplary apartment, where a control system according to the invention is used for controlling environmental conditions, and
- Figure 3: illustrates an exemplary block diagram of an exemplary control panel according to the invention.

### DETAILED DESCRIPTION

Next the invention is presented by first describing an exemplary control system in which a control panel according to the invention can be used. Then, an exemplary control panel according to the invention is described.

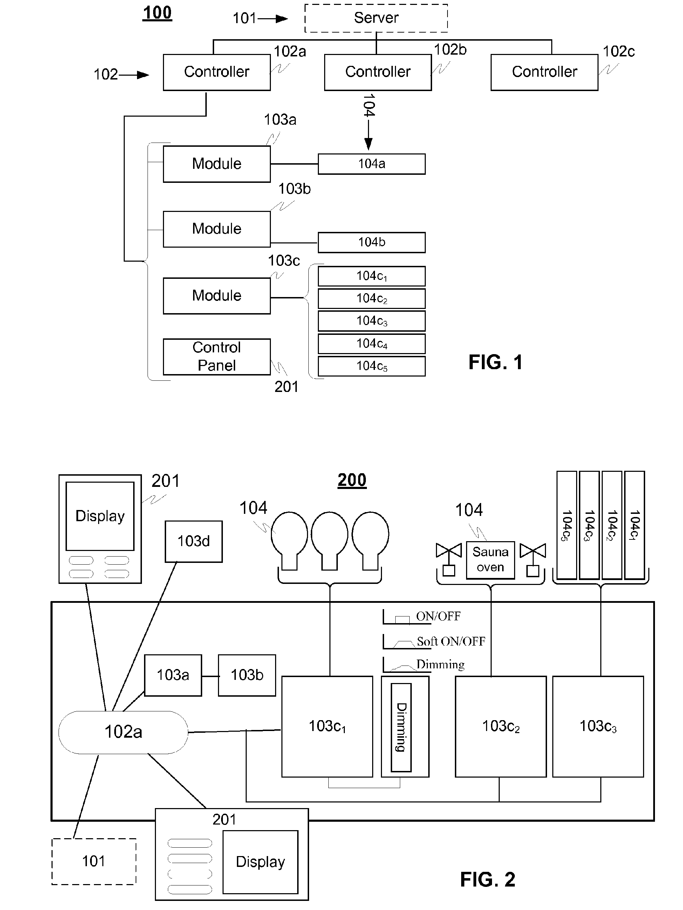

Figure 1 illustrates an exemplary hierarchy of a system 100 in which a control panel according to the invention is used. The system advantageously comprises two layers, namely a controller layer having controlling means or shortly controllers 102 and a module layer having modules 103. In addition the system may also have a server layer 101 having e.g. a main server, but it should be noted that the main server or server layer is not essential in every embodiment according to the invention, but the controlling means may be in data communications directly with each other without the need of server between.

According to an embodiment one controller 102a is advantageously related to one entity, such as an apartment, home, business office, factory or logistics warehouse. The controller 102 is a central hub communicating from one side with different kinds of modules e.g. through RS485 lines and from the other side with other controllers 102a, 102b, 102c located e.g. in different entities. If the server is used (like in more complex systems comprising e.g. hundreds of entities in a large area, such as a neighbourhood or suburb the controllers 102 are in a data connection also with the server 101 e.g. through a data communication system, such as the Internet.

When the server 101 is used the controller 102 may initiate a connection with the server after powering it up. A unique ID and security certificate may be checked by the server during the connection set-up, and the controller may also check the server's security certificate. If the unique ID and all certificates match, a secure communication channel is established. The communication between the controller 102 and server 101 is advantageously encrypted and therefore the public Internet can be used for data transmission. Each controller has a unique ID and advantageously also a security certificate.

As discussed earlier the controller 102a may be in data connection with modules and user interface units, such as for example with an access control module 103a, security module 103b, I/O module 103c or control panel 201. In addition the modules are in a data connection with different kinds of equipments 104 and/or sensors, such as the access control module 103a may be in data connection with the access managing equipment 104a, like a door sensor (sensing whether the door is open or closed so the equipment may also be in a simplest mode a sensor sensing some environmental condition), electric lock of the door (opening and closing the lock), a buzzer, open button, and key or ID reader. The security module 103b may be in data connection with a security sensor equipment 104b having e.g. input, such as a PIN code reader. The I/O module 103c may be adapted to sent operating signals e.g. to a heating means 104c₁, cooling means 104c₂, ventilation means 104c₃, lighting means 104c₄, means for affecting humidity 104c₅, and sprinkler system. The control panel 201 is adapted to gathering or receiving measuring signals from the sensors of the control panel, said measuring signals indicating e.g. information relating to the environmental conditions of the entity, such as temperature, humidity and CO₂ level. The control panel also serves as user interface with a touch screen and display, for example.

The controller has advantageously access to information related to the desired and/or measured environmental conditions, such as climate and lighting, access rules, security and remote metering. Said information related to the environmental conditions may be e.g. temperatures, humidity values, CO₂-levels, lighting conditions and security details when the entity to which the controller relates is either occupied or non-occupied and/or in some other state, such as for example in a fire situation or under a chancing weather condition. Temperature may be set e.g. lower for the non-occupied entity than for occupied entity, as well as a sprinkler system may be activated in a fire situation and message sent to the fire station.

According to an embodiment information related especially to desired environmental conditions is advantageously locally stored in the controller, which allows for autonomic work also in case of Internet connection loss. All data may be stored locally. According to an embodiment it can also be sent to the server after the Internet connection is restored and if the server is used.

The modules may also be adapted to gather measuring information advantageously from the equipments, such as from heating means 104c₁, cooling means 104c₂, ventilation means 104c₃, lighting means 104c₄, means for affecting humidity 104c₅ and sprinkler system. The measuring information may indicate for example current operating status of the equipment. Control panels and modules are advantageously adapted to send said information to the corresponding controller or the controller is adapted to read said information from the control panels / modules.

The controller 102a is adapted to determine measuring information gathered from the sensors of the control panels 201 and equipments 104. Based on the measuring information as well as information related to desired environmental conditions and/or rules input by the user determined and sent a control signal to at least one module being in a data connection with the corresponding equipment used for controlling the environmental condition of said entity.

A server 101 may be incorporated into the hierarchy of the system 100, whereupon some of the tasks dedicated to the controller (in the embodiment without the server) may also be managed by the server, such as analysing measuring information and determining control signal to be fed into the modules. The server is also typically used to control decisions beyond the reach of the controller due to the complexity of the rules or because of rules relating to signals from modules connected to different controllers.

Also, different signals and messages to and from outside the system 100 are advantageously handled by the server, such as for example information related to weather forecast, traffic jams, and tariff and/or prediction of the energy and water costs, as well as also other information related to environmental conditions outside the entities. For example if the server is provided with weather forecast information forecasting cooler weather for a certain area, the server may determine and sent a signal to the controllers located in said area in order to take into account the changing weather conditions. The server may even calculate, taking into account the energy prizes, such as night-rate, the cheapest time for pre-heating the entities in said area, and sent signal indicating the optimal time window to the appropriate controllers.

The server may be adapted to allow web-based system set-up and management, as well as to control logging of events so that all events are logged e.g. in the server SQL database and are accessible to queries e.g. from authorized outside applications (management tools). In addition the controller controlling and monitoring modules' status may send data to the server, where data may be stored e.g. an SQL database, as well as also processed and analysed and taken into account when determining control signals to the controllers. Furthermore the server may be used to manage configurations and updating the controllers' logic and/or software.

The system may utilize neural network and self-learning algorithms, such as learning inertia of the entity relating e.g. to cooling or heating. The learning may be continuous learning, where the system updates its learning every time when the environment condition must be changed, for example taking into account also the current weather (wind, sunny, humidity and outdoor temperature, for example) when changing the entity's temperature and/or humidity, for example.

Figure 2 illustrates an exemplary single apartment 200, where the system, such as the system 100, is used for controlling the environmental conditions according to an embodiment of the invention. The hierarchy of the components, such as controllers 102 (i.e. controlling means), control panels 201, modules 103 and equipments 104, as well as also a server 101 (if used), is advantageously similar as described in connection with the figure 1.

The control panels 201 are in a data connection with the controller responsible of controlling the environmental conditions of said entity 200. The control panel 201 is used e.g. for inputting control parameters for desired environmental conditions, but it can be used also for informing the user e.g. about the current environmental conditions of the entity, energy consumption and maintenance costs, as well as displaying information transferred from the outside of the entity 200, such as for example weather forecast information or outside environmental information sent by the server in the embodiment, where the server is in use. Also some of the information sent by the other controllers managing the other entities may be displayed, such as e.g. information about possible fire in the neighbourhood or environmental conditions of the user's workplace. In accordance with the present invention the control panel 201 also comprises at least one sensor for determining environmental conditions, such as temperature and other parameters discussed elsewhere in this document.

The user interface means 201 can be implemented e.g. by a touch screen. It should be noted that there may be numbers of user interface means 201 in the same entity, such as one on the first floor and the other on the second floor. According to an embodiment an LCD keypad may be installed e.g. in the garage instead of a costly touch screen. In addition an infrared module 103d (or other module able to a wireless communicating) may also be installed nearby the garage, so that the user may control for example the function of garage door by the remote controller. It should be noticed that also information from these control panels are used for example for controlling the environmental condition inside the apartment 200, such as for example when the user is arrived in the garage, the lighting and air ventilation may be switched into the occupied mode.

It should be noticed that the control panel may be web-based and accessible from a computer or hand-held device, like devices connected to LAN or to the Internet. The control panel may also be used for real time system monitoring and controlling e.g. via the touch screen, computer or hand-held device, such as smart phone, as well as overall managements, such as managing users / access control rules, viewing logs, work time and security areas status, arming/disarming etc.

The system 100 may be used at the entity 200 for controlling the same exemplary environmental conditions as described elsewhere in this document. The controller 102a is used at the entity 200 for example controlling access and security means via the access control module 103a and security module 103b, respectively. In addition the controller 102a communicates with the I/O module 103c₁ to control lighting conditions (illuminators and lamps 104c₄, for example), and the I/O module 103c₂ to control the heating of a sauna (oven, heat collector, taps, water valves in the sauna), as well as the I/O module 103c₃ to control air condition, such as a heating means 104c₁, cooling means 104c₂, ventilation means 104c₃, and/or means for affecting humidity 104c₅.

Next few environmental conditions controlling examples are handled in connection with the apartment 200. Typically an entity's climate is mostly controlled by heating, cooling and ventilation. Those systems (according to prior art solutions) are generally "unaware" of each other's activities. For example, the heating system may be functioning at the same time the air conditioner is cooling. In addition, a constant flow of sufficient fresh air in the building is maintained according to a pre-controlled volume, not on the basis of air quality or the people present. All this requires an unreasonable amount of money and natural resources.

One object of the present invention is to make it easier to ensure that for example heating and cooling are not operating simultaneously in the same room, and that the entity's ventilation process is carried out according to the quality of the air or according to the people present in the room. This can be achieved for example by collecting information by sensors and access control means integrated in the control panels and possible additional separate sensors. Also inertia of a building when cooling, as well as when heating is considered, and if applicable, indicators such as whether it is a sunny or a cloudy day and a 4-day forecast are also added.

According to an embodiment of the invention also a neural network technology may be utilized for example in a self-learning climate or other environment condition regulation. The self-learning capability automatically adjusts the climate control system to each room's energy characteristics, i.e. an installer doesn't have to consider the building's construction parameters (such as heating inertia etc.) and calculate the appropriate static control characteristics. These functions are built advantageously into the system 100 and are for example controlled by a computer program product run at/by the controller or server being in data communication with the modules. Together with integrated sensors this has clear advantages and rapidly reduces the system adjustment time and guarantees maximum energy savings and constant automatic tuning of the climate control algorithm.

Furthermore additional energy savings are achieved by room-based ventilation control according to the invention. Ordinarily savings on energy are achieved by time-based automation (date and time), but the present invention provides an additional saving method, such as a presence-based climate control. This can be implemented by using movement detectors at control panels. If there's no one in a room, the system automatically decreases the heat setting and resets ventilation at the minimum level. Whenever a user enters the room, the normal climate control settings are restored. Also neural network and self-learning algorithms can be used for predicting e.g. when the user is arriving in the entity so that the equipments for controlling the environmental conditions can be switched for suitable mode and power at an appropriate moment and that the environmental condition, such as temperature, will be comfort at the time when the user arrives.

Also lighting control of the apartment 200 is one of the environmental conditions controlled easily by the present invention, with the use of sensors of the control panels. Lighting can be controlled according to the security of the building as well as by people's movement. For example, when the security system is switched off in the dark, sufficient lighting will be automatically switched on, as well as office rooms are lighted in accordance with the people arriving in rooms. The system 100 may also be adapted to switch off the lighting when people leave the rooms. Relevant information is obtained from the equipments and measuring devices of the control panels, such as from access control means, motion detectors and/or CO₂ level detector, for example. The required illuminance conditions can be achieved by using the feedback information from the light sensors of the control panels for controlling the lighting equipments.

Thus the system may be adapted to control a building's lighting according to the people presence, date and time, and also illuminance, room by room, whereupon it is possible to achieve up to 44% energy savings on lighting by combining only these three control methods. It should be noted that the presence-based lighting control offers savings, but also comfort simultaneously. Forgotten lights can be totally/partly switched off or the power can be reduced to increase savings if there has been no movement in a room for a certain time. Identified movements and automatically switched on lights make living more comfortable. It's important to note that no special additional motion detectors are needed, because the system may use the same motion detectors integrated to control panels for both environmental control and security system.

In more details the date- and time-based lighting control makes it possible to switch all lights on and off at a certain time and, as a result, avoid wasting energy. Illuminance-based lighting control offers in its part the opportunity during the day to switch off lights which are pointless because there's enough illuminance coming through the windows. The illuminance conditions can be taken into account for example by measuring with appropriate sensors of the control panels.

The system 100 of the invention may also manage an alarm system of the apartment 200 e.g. by providing alarm and presence information to security companies, customers and other appropriate parts, such as lighting and climate control. According to an embodiment of the invention there's no need to integrate the system 100 into a separate alarm system, but all connections e.g. to lighting and climate control are handled by the software run at/by the controller or server (if used). The configuration of the function can be done simples just by defining rules. The system 100 may make an alarm to an appropriate party for example if there is a burglar, fire, panic or tampering or forced opening in the entity, or if some climate conditions indicating value (such as temperature, humidity, CO₂ level) exceeds the allowed range.

Furthermore the system 100 of the invention may also manage an access control of the apartment 200 e.g. by providing presence and location information for registering people's movements and using said information for controlling e.g. lighting and climate.

Also an intercom means can be incorporated into the system 100 used in the apartment 200. An audio/video intercom function may be combined e.g. with a VoIP (Voice over IP) technology-based voice system and a surveillance camera-based video system. The controller 102a or server (if used) comprises a VoIP gateway so that video pictures from the (video) security system and voice signals from outside are combined and shown on the user interface means, such as via a touch screen and on a web browser. According to an exemplary scenario of the invention a guest may dial the phone number of the apartment/house, whereupon the controller 102a receives a signal, switches the touch screen picture to a preconfigured surveillance camera and plays a doorbell melody on a loudspeaker. The user may answer the call, cancel the call or let the guest in at once without answering the call. Video messages may be available for leaving messages if people are not home.

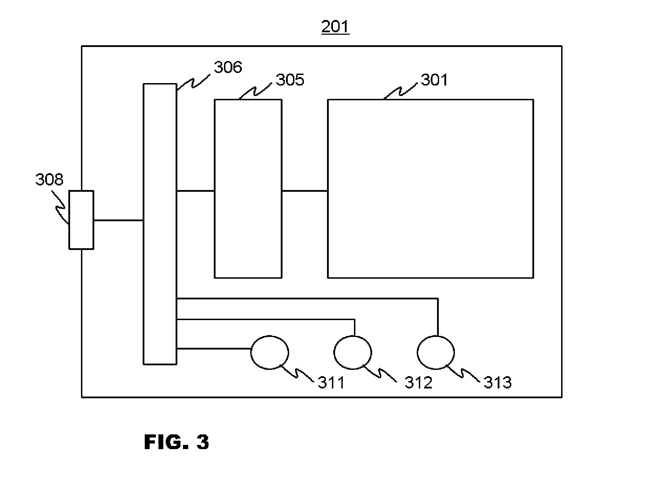

Figure 3 illustrates an exemplary control panel 201 according to the invention. It has a touch screen 301 which serves both as a display and an user input means. There is a driver circuit 305 for driving the display and the input circuitry of the touch screen. The touch screen may be based on resistive or capacitive technology, for example. However, capacitive technology is preferable due to a better touch sensitivity and lower manufacturing costs.

The control panel of Figure 3 includes three sensors 311, 312 and 313. They may be a light sensor, a temperature sensor, and a movement sensor, for example. The sensors are equipped with corresponding amplifiers and A/D converters 321, 322, 323.

The control panel is connected to the controller with a serial interface 308. There is an interface circuit 306 which handles the data transfer between the control panel components and the serial interface. The control panel preferably also receives its supply voltage via the serial interface. Although the use of serial interface is preferable, it is alternatively possible to use other types of interfaces, such as parallel interface or wireless interface. If a wireless interface is used, the control panel must be equipped with a separate power supply.

As described above, the control panel may include other types of sensors, it may include access control means, video camera or other security means.

It should be noted that the functioning of the control panels may at least partly require a suitable computer program product, when said computer program product is run on a computer or the like, such as the controlling means or the server described in this document.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims.

## Claims

1. Control panel for a control system of a building, which control system comprises sensors for sensing conditions in the building, user input means for inputting control commands to the system, processing means for controlling equipments of the building on the basis of the user commands and the data received from the sensors, and user output means for providing information on the system for the user, **characterized in that** one and same control panel comprises at least one said user input means, at least one said user output means, and at least one said sensor, whereby a value of a magnitude of the building conditions is arranged to be controllable by the system on the basis of user input from said user input means of the control panel and by the sensor data received from the sensor of the control panel.

2. Control panel according to claim 1, **characterized in that** information on the value of said magnitude is arranged to be given for the user by the user output means of the control panel.

3. Control panel according to claim 1 or 2, **characterized in that** the sensor is a temperature sensor, a CO₂ sensor, a humidity sensor, a light sensor, or a movement sensor.

4. Control panel according to any previous claim, **characterized in that** the magnitude is air temperature, air humidity, CO₂ contents of air, or light intensity.

5. Control panel according to any previous claim, **characterized in that** the sensor data, the commands of the user input means, and the user output information are transferred between the control panel and the processor means via a common data bus.

6. Control panel according to any previous claim, **characterized in that** said user input means comprises a touch screen.

7. Control panel according to claim 8, **characterized in that** said touch screen is based on capacitive touch sensing.

8. Control panel according to any previous claim, **characterized in that** said user output means comprises a flat display.

9. Control panel according to any previous claim, **characterized in that** the control panel comprises a touch screen, which serves as said user input means and said user output means.

10. Control system of a building, comprising sensors for sensing conditions in the building, user input means for inputting control commands to the system, processing means for controlling equipments of the building on the basis of the user commands and the data received from the sensors, and user output means for providing information on the system for the user, **characterized in that** the system comprises a control panel, and one and same control panel comprises user input means, user output means, and a sensor, whereby a value of a magnitude of the building conditions is arranged to be controllable by the system on the basis of user input from said user input means of the control panel and by the sensor data received from the sensor of the control panel.
